# EUROPEAN PATENT APPLICATION

(11) **EP 4 667 120 A1**
(43) Date of publication of application: **24.12.2025**
(21) Application number: 25179759.3
(22) Date of filing: 29.05.2025
(51) Int. Cl.: B05B 13/00, B05B 13/04

(54) **A SYSTEM AND METHOD FOR AUTOMATED DISTRIBUTION**

(30) Priority: 17.06.2024 US 202418745288
(71) Applicant: Lockheed Martin Corporation, Bethesda, MD 20817 (US)
(72) Inventor: McCrory, Christopher Sean, Fort Worth, TX 76107 (US); Drewett, Jeffery Thomas, Kennedale, TX 76060 (US); Franks, Ron K., Bluff Dale, TX 76433 (US); Stephens, Adam Michael, Azle, TX 76020 (US); Smith, Carl Travis, Fort Worth, TX 76179 (US)
(74) Representative: Barker Brettell LLP

(57) **Abstract**

In one embodiment, a distribution system (100) is provided. The distribution system comprises an enclosure (104) to house the distribution system. The distribution system further comprises a robotic distribution device (108) configured to receive a first distribution position, move to a first distribution position, and coat a first part (102). The distribution system further comprises a plurality of sensors (110) configured to receive a first physical position, receive a first distribution position, determine whether the enclosure is in the first physical position, determine whether the enclosure is in the first distribution position, determine whether the robotic distribution device is in the first distribution position, and monitor an environment surrounding the enclosure. The distribution system further comprises a mobility system (106) configured to move the enclosure to the first physical position and move the enclosure to the first distribution position.

## Description

### TECHNICAL FIELD

This disclosure relates in general to a distribution system, and more particularly, to a system and method for automated distribution.

### BACKGROUND

Various systems, equipment, and methods may be used in a manufacturing facility. As an example, systems are needed to produce, treat, and incorporate parts into a variety of applications. Specifically, these parts are often coated with a material, such as paint, after the part is produced and before the part is incorporated into an application. Common coating methods include manual application or floor mounted robotic distribution systems. Typically, the floor mounted systems are not mobile, occupy a large portion of the production floor space, and are not suitable for hazardous work environments. Manual application may result in human error and/or exposure to toxic chemicals.

### SUMMARY

This disclosure introduces a novel approach using an automated distribution system to coat parts. This technology offers distinct advantages over conventional distribution systems, addressing their inherent limitations. By allowing the distribution system to be automated and mobile, this technology allows for coating to be performed anywhere on the production floor, without operator assistance. By allowing the distribution system to comply with the Class 1, Division 1 ("C1D1") safety requirements, the distribution system may operate in a variety of environments, including spaces which handle hazardous materials, such as flammable or combustible materials.

According to one embodiment, a distribution system includes an enclosure, mobility system, robotic distribution device, sensor, distribution material housing unit, and a mobile waste unit. The enclosure is configured to house one or more components of the distribution system. The mobility system is configured to transport the distribution system over variable distances. The robotic distribution device is configured to distribute a distribution material onto a part. The sensor is configured to detect and respond to the physical environment of the distribution system and assist the distribution system in navigating to various positions. The distribution material housing unit is configured to house the distribution material. The mobile waste unit is configured to collect the excess waste from the distribution system.

According to another embodiment, a method of automated distribution executed by a distribution system includes identifying a part. The method also includes moving the distribution system to a physical position using a mobility system. The method further includes moving the distribution system to a distribution position using the mobility system. The method further includes moving a robotic distribution device to the distribution position if the distribution system is in the distribution position. The method also includes receiving a distribution material from a distribution material housing unit. Th method further includes distributing the distribution material onto the part using the robotic distribution device. The method further includes determining if there are additional parts on which to distribute the distribution material.

### BRIEF DESCRIPTION OF THE DRAWINGS

For a more complete understanding of the present disclosure and its advantages, reference is now made to the following description, taken in conjunction with the accompanying drawings, in which:
FIGURE 1 illustrates a distribution system, according to certain embodiments; and
FIGURE 2 illustrates a method of automated distribution, according to certain embodiments.

### DETAILED DESCRIPTION

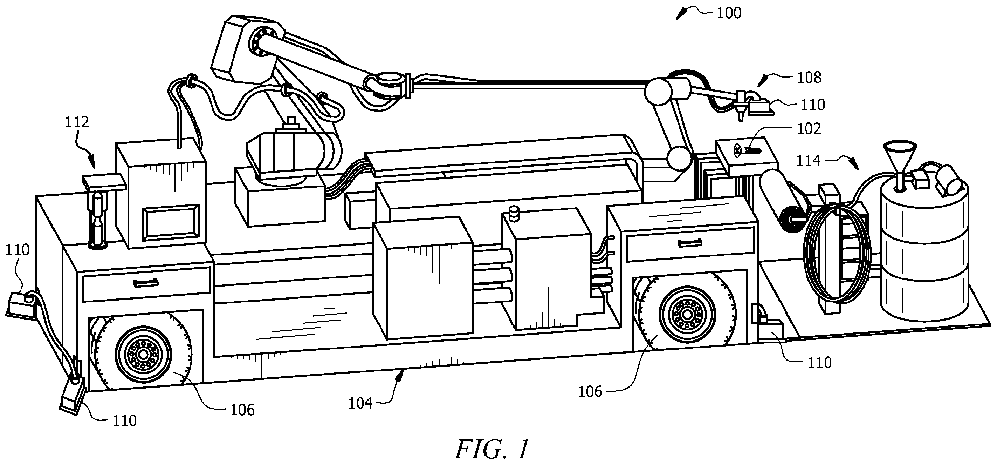

To facilitate a better understanding of the present disclosure, the following examples of certain embodiments are given. The following examples are not to be read to limit or define the scope of the disclosure. Embodiments of the present disclosure and its advantages are best understood by referring to FIGURES 1 through 2, where like numbers are used to indicate like and corresponding parts.

As described, distribution systems may require floor mounts. A floor mounted distribution system requires the system to be installed onto the floor of a production or facility space and limits the areas on the production floor that allow for distribution. Floor mounted distribution systems do not allow facilities to be reconfigured. The current distribution systems are costly, arduous to install and build, and limit floor space. Described herein are various systems and methods that provide for autonomous distribution.

FIGURE 1 illustrates an example distribution system 100 that distributes material onto a part 102. Any suitable distribution system may be used as the distribution system 100. The distribution system may be C1D1 certified. A C1D1 certification ensures that the distribution system meets the safety requirements in order to reduce the risk of fires, explosions, or other hazardous incidents. The part 102 may be a tube, sheet, screw, engine, and the like. Additionally, the part 102 may be any suitable material. For example, part 102 may be metal, plastic, ceramics, wood, and the like. In one or more embodiments, the part 102 may be disposed within the distribution system 100.

In one or more embodiments, the distribution system 100 may comprise an enclosure 104. The enclosure 104 may comprise any room or structure that houses one or more components of the distribution system 100 (e.g., mobility system 106, robotic distribution device 108, sensor 110, distribution material housing unit 112, and mobile waste unit 114). The enclosure 104 may be comprised of any suitable material. Without limitation, enclosure 104 may be comprised of metal, plastic, ceramics, wood, and the like.

In one or more embodiments, the distribution system 100 may comprise a mobility system 106. As illustrated, the mobility system 106 may be integrated into the distribution system 100. The mobility system 106 may transport the distribution system 100 over variable distances. The mobility system 106 may transport the distribution system 100 in any suitable direction. Any suitable type of mobility system with any suitable components may be used as the mobility system 106. Without limitation, mobility system 106 may include at least one wheel, a tracked tread system, robotic legs, and the like.

In one or more embodiments, the distribution system 100 may comprise a robotic distribution device 108. As illustrated, the robotic distribution device 108 may be integrated into the distribution system 100. The robotic distribution device 108 distributes a distribution material onto the part 102. Any suitable type of material may be used as the distribution material. For example, and without limitation, the distribution material may be comprised of paint, powder, varnish, and the like. Any suitable type of robotic distribution device may be used as the robotic distribution device 108. Without limitation, robotic distribution device 108 may be a robotic spray gun, a robotic coating system, an automated paint system, and the like.

In one or more embodiments, the distribution system 100 may comprise at least one sensor 110. As illustrated, the sensor 110 may be integrated into the distribution system 100. The sensor 110 may detect and respond to the physical environment surrounding the distribution system 100 to assist in navigating the distribution system 100 to various positions. Any suitable number of sensors 110 may be present in the distribution system 100. The sensor 110 may be disposed on any suitable location on the distribution system 100. Any suitable type of sensor may be used as the sensor 110. Without limitation, sensor 110 may be a lidar sensor, edge detecting sensor, radar sensor, and any combination thereof.

In one or more embodiments, the sensor 110 assists the distribution system 100 in navigating to a physical position. The physical position is a predefined location where the part 102 for the distribution job is located. For example, and without limitation, the physical position may be a room, booth, an area on a production floor space, and the like. The physical position may be a space which handles hazardous materials, such as flammable or combustible materials. The sensor 110 may assist the distribution system 100 in navigating to a physical position within a predetermined range, such as within a hundredth of an inch.

In one or more embodiments, the sensor 110 may assist the distribution system 100 in navigating to a distribution position. The distribution position is a predefined location where the distribution system 100 begins a distribution job. For example, and without limitation, the distribution position may be the precise location of an uncoated part within the room, booth, and/or area. The sensor 110 may assist the distribution system 100 in navigating to the distribution position within a predetermined range, such as within a thousandth of an inch.

In one or more embodiments, the sensor 110 assists the robotic distribution device 108 in navigating to the distribution position. The sensor 110 may assist the distribution system 100 in navigating to a position within a predetermined range, such as within a thousandth of an inch.

In one or more embodiments, the sensor 110 may assist the distribution system 100 in avoiding foreign objects and/or obstacles during a distribution job. The sensor 110 sends a signal to distribution system 100 to stop the distribution job and/or to stop moving if an obstacle is detected while moving and/or performing robotic operations. Without limitation, an obstacle may be a person, machine, piece of equipment, and the like.

In one or more embodiments, the distribution system 100 may comprise a distribution material housing unit 112. As illustrated, the distribution material housing unit 112 may be integrated into the distribution system 100. The distribution material housing unit 112 may house the distribution material that is distributed on the part 102. Any suitable housing unit may be used as the distribution material housing unit 112.

In one or more embodiments, the distribution system 100 may comprise a mobile waste unit 114. As illustrated, the mobile waste unit 114 may be integrated into the distribution system 100. The mobile waste unit 114 may collect waste from the distribution system 100. For example, and without limitation, the distribution system 100 may flush out excess and/or undesired material from the distribution material housing unit 112 into the mobile waste unit 114.

The mobility system 106, the robotic distribution device 108, the sensor 110, the distribution material housing unit 112, and the mobile waste unit 114 may be disposed at any suitable location to form distribution system 100. In embodiments, each of the mobility system 106, the robotic distribution device 108, the sensor 110, the distribution material housing unit 112, and the mobile waste unit 114 may be coupled together through any suitable means, including, but not limited to, fasteners, threading, welding, brazing, adhesives, and any combination thereof.

Distribution system 100 may operate in any suitable manner. In an exemplary embodiment of operation, distribution system 100 may identify a part 102 for a distribution job. Distribution system 100 may move to a predefined location where part 102 is located. Distribution system 100 may move to a predefined location where the distribution system 100 begins a distribution job. Distribution system 100 may move robotic distribution device 108 to a predefined location where the distribution system 100 begins a distribution job. Distribution system 100 may receive distribution material from distribution material housing unit 112. Distribution system 100 may distribute distribution material onto part 102 using robotic distribution device 108.

Modifications, additions, or omissions may be made to distribution system 100 as shown in FIGURE 1. For example, robotic distribution device 108 may be configured to coat more than one part 102 at a time. As another example, the mobile waste unit 114 may be separate from the distribution system 100. As another example, the sensor 110 may monitor various aspects of the distribution system such as its temperature, speed, and the like.

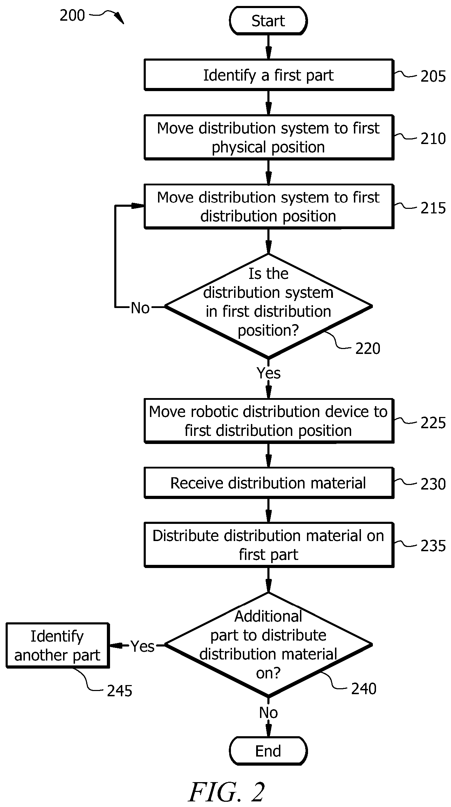

FIGURE 2 illustrates a method of automated distribution, according to certain embodiments. Method 200 may be performed by distribution system 100. Method 200 begins at step 205 where the distribution system 100 identifies a first part, such as part 102. The distribution system 100 may identify the part 102 by any suitable method. For example, and not by way of limitation, the distribution system 100 may identify the part 102 through an operator manually inputting the coordinates of the part 102 into the distribution system 100, through sensors, such as sensor 110, and the like.

At step 210, the distribution system 100 moves to a first physical position using a mobility system, such as mobility system 106. At step 215, the distribution system 100 moves to a first distribution position. At step 220, if the distribution system 100 is in the first distribution position, the distribution system will move to step 225, where the distribution system 100 will move the robotic distribution device 108 to the first distribution position. If the distribution system 100 is not in the first distribution position, the distribution system 100 will return to step 215.

At step 230, the distribution system 100 will receive distribution material from a distribution material housing unit, such as distribution material housing unit 112. At step 235, the distribution system 100 will distribute the distribution material on the first part, such as part 102, using a robotic distribution device, such as robotic distribution device 108.

At step 240, the distribution system 100 will determine if the distribution job is complete or if there are additional parts to distribute the distribution material on. If there are not additional parts, the distribution job is complete and method 200 ends. If there are additional parts, distribution system 100 identifies another part.

Modifications, additions, or omissions may be made to the method as described in FIGURE 2. For example, the distribution system 100 and the robotic distribution device may move to any suitable position. As another example, at step 205, the distribution system 100 may identify more than one part. As another example, at step 235, the distribution system may distribute the distribution material on more than the one part. As another example, at step 235, the distribution system may distribute the distribution material on only a certain portion of the part. As another example, at step 240, the distribution system 100 may determine if the first part requires an additional coating of the distribution material.

Technical advantages of this disclosure may include one or more of the following. Previous systems and methods required stationary equipment or the manual application of the distribution material. The distribution system 100 described herein may work in any production space. Previous systems and methods were not suitable for hazardous work environments. The distribution system 100 described herein may be C1D1 certified and fit to work in C1D1 classified environments. The distribution system 100 described herein may reduce costs associated with installing and building floor-mounted equipment. The distribution system 100 described herein may also increase consistency and decrease the potential exposure to toxins from the distribution material.

The present disclosure may provide numerous advantages, such as the various technical advantages that have been described with respective to various embodiments and examples disclosed herein. Other technical advantages will be readily apparent to one skilled in the art from the following figures, descriptions, and claims. Moreover, while specific advantages have been enumerated in this disclosure, various embodiments may include all, some, or none of the enumerated advantages.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. A system comprising:
an enclosure to house a distribution system;
a robotic distribution device mounted on said enclosure configured to:
receive a first distribution position;
move to the first distribution position; and
coat a first part;
a plurality of sensors mounted on said enclosure configured to:
receive a first physical position;
receive the first distribution position;
determine whether the enclosure is in the first physical position;
determine whether the enclosure is in the first distribution position;
determine whether the robotic distribution device is in the first distribution position; and
monitor an environment surrounding the enclosure; and
a mobility system, wherein said mobility system is configured to:
move the enclosure to the first physical position; and
move the enclosure to the first distribution position.

2. The system of claim 1, further comprising:
a mobile waste unit, wherein said mobile waste unit is configured to:
couple to the enclosure; and
receive waste from the system.

3. The system of claim 1 or claim 2, wherein the plurality of sensors is further configured to determine whether the enclosure and the robotic distribution device are in the first distribution position and the first physical position within a predetermined range.

4. The system of any one of claims 1 to 3, wherein the plurality of sensors is further configured to send a signal to the system if said plurality of sensors detects a foreign object.

5. The system of any one of claims 1 to 4, wherein the plurality of sensors comprises a plurality of lidar sensors, the plurality of sensors optionally comprises a plurality of edge detecting sensors.

6. The system of any one of claims 1 to 5, further comprising a distribution material housing unit configured to house a distribution material.

7. A method comprising:
receiving a plurality of parts;
sending a distribution system to a first physical position;
sending the distribution system to a first distribution position;
moving a robotic distribution device to the first distribution position, wherein the robotic distribution device is mounted on the distribution system;
receiving a distribution material; and
distributing the distribution material on a first part using the robotic distribution device.

8. The method of claim 7, further comprising determining if a distribution job is complete and if the distribution job is not complete:
sending the distribution system to a second physical position;
sending the distribution system to a second distribution position;
sending the robotic distribution device to the second distribution position; and
distributing the distribution material on a second part using the robotic distribution device.

9. The method of claim 7 or claim 8, further comprising monitoring an environment around the distribution system using a plurality of sensors.

10. The method of claim 9, further comprising receiving waste from the distribution system using a mobile waste unit, wherein said mobile waste unit is configured to couple to the distribution system.

11. The method of claim 9 or claim 10, further comprising determining whether the distribution system is in the first physical position and the first distribution position using the plurality of sensors, the method optionally further comprising determining whether the robotic distribution device is in the first distribution position using the plurality of sensors.

12. The method of any one of claims 9 to 11, further comprising:
determining whether the distribution system is in the first physical position and the first distribution position using the plurality of sensors within a predetermined range; and
determining whether the robotic distribution device is in the first distribution position using the plurality of sensors within a predetermined range.

13. The method of any one of claims 9 to 12, further comprising sending a signal to the distribution system if the plurality of sensors detects a foreign object.

14. The method of any one of claims 9 to 13, further comprising monitoring the environment around the distribution system, wherein the plurality of sensors is lidar sensors, wherein the plurality of sensors is optionally edge detecting sensors.

15. The method of any one of claims 7 to 14, further comprising housing the distribution material in a distribution material housing unit.
